# EUROPEAN PATENT SPECIFICATION

(11) **EP 3 019 423 B1**
(45) Date of publication and mention of the grant of the patent: **29.07.2020**
(21) Application number: 14733362.9
(22) Date of filing: 30.05.2014
(51) Int. Cl.: B65G 47/51, B65B 35/04

(54) **OPERATING ACCUMULATION ASSEMBLY FOR MACHINES FOR PACKAGING GROUPS OF SUBSTANTIALLY PLATELIKE PRODUCTS AND RELATED MACHINE FOR PACKAGING SUCH GROUPS OF PRODUCTS**
BETRIEBSAKKUMULATIONSANORDNUNG FÜR MASCHINEN ZUM GRUPPENWEISEN VERPACKEN VON IM WESENTLICHEN PLATTENFÖRMIGEN PRODUKTEN UND ZUGEHÖRIGE MASCHINE ZUM VERPACKEN SOLCHER GRUPPEN VON PRODUKTEN
ENSEMBLE OPÉRATIONNEL D'ACCUMULATION DESTINÉ À DES MACHINES POUR L'EMBALLAGE DE GROUPES DE PRODUITS SENSIBLEMENT SOUS FORME DE PLAQUES ET MACHINE CORRESPONDANTE POUR L'EMBALLAGE DE TELS GROUPES DE PRODUITS

(30) Priority: 09.07.2013 IT BO20130354
(43) Date of publication of application: 18.05.2016
(73) Proprietor: I.M.A. Industria Macchine Automatiche S.p.A., 40064 Ozzano dell'Emilia (BO) (IT)
(72) Inventor: GUIDI, Giulia, I-40141 Bologna (IT); SASSI, Fabio, I-40133 Bologna (IT)
(74) Representative: Modiano, Micaela Nadia
(86) International application number: PCT/IB2014/061849
(87) International publication number: WO 2015/004546

(56) References cited:
- EP-A2- 0 405 121
- WO-A2-2013/007773
- US-A- 3 499 555
- US-A- 4 230 216
- US-A- 5 400 894

## Description

The present invention relates to an operating accumulation assembly for machines for packaging groups of substantially platelike products and a related machine for packaging such groups of products.

Recently a major spread has been witnessed of chewing gum in an ingot or "stick" format: each single stick of gum to be chewed is usually wrapped with a strip of packaging material (which can be paper, polymeric, metallic and/or combinations thereof). The sticks of gum individually wrapped in the above mentioned strips of packaging material are subsequently grouped and arranged inside a package that can be directly displayed for sale.

For the complete packaging of such sticks of gum to be chewed it is necessary to have two processing stations: a first station is constituted by a wrapping machine, which is designed to wrap the stick with the above mentioned strip of packaging material, and a second station is constituted by a cartoning machine that arranges the groups of sticks, which have already been individually wrapped in strips of packaging material, inside an adapted package.

This type of multiple packaging machine suffers considerable problems which relate to the drawbacks that arise in the event of short stoppages of any nature of one of the two stations.

In fact, a malfunction/shutdown of the wrapping machine determines a consequent discontinuity of operation of the cartoning machine, because the sticks of gum suitably wrapped in strips of packaging material will no longer arrive there. This can also determine the redirection to a respective discard circuit of any packages that are incomplete or even empty.

In the same way, a malfunction/shutdown of the cartoning machine necessarily requires an immediate discontinuity of operation of the wrapping machine, since otherwise the sticks of gum wrapped in the strips of packaging material would have to be redirected to a discard circuit, given the impossibility of arranging them in a respective package.

In any case, upon a malfunction/shutdown of one station, given the impossibility of acting immediately to interrupt the operation of the other station, there will be an accumulation of a plurality of discards (with the consequent burden of production, already borne, and burden of disposal, to be borne).

US 5 400 894 discloses an accumulator apparatus for accumulating product from a production line conveyor when a downstream stoppage occurs, that comprises a combination of elements as set forth in the preamble of the appended claim 1. Such accummulator apparatus comprises a cylindrical compartmented rotary drum having a plurality of shelves for supporting product thereon. A loading mechanism loads product from the conveyor upon each drum shelf when the downstream stoppage occurs. An unloading mechanism unloads product from each shelf of the drum when the downstream stoppage problem has been resolved.

EP 0 405 121 discloses a plant for making large packages in the form of cartoned packs of groups of small packages of paper handkerchiefs, comprising a folding machine for making the handkerchiefs and grouping them into stacks, a packaging machine for wrapping the stacks in a film for forming a small package, a stacker for forming groups of small packages, a packing machine for wrapping the groups in a film to form a pack, and a cartoning machine for introducing the packs into a carton and closing thereof for forming large packages. A storage unit for intermediate storage and delivery of small packages is inserted into the production plant in the direction of production downstream of the packaging machine.

The aim of the present invention is to solve the above mentioned drawbacks, by providing an operating accumulation assembly for machines for packaging groups of substantially platelike products which minimizes production discards.

Within this aim, an object of the invention is to provide an operating accumulation assembly for machines for packaging groups of substantially platelike products which prevents the interruption of the entire plant in the event of a malfunction of one of the processing stations that constitute it.

Another object of the invention is to provide a related machine for packaging such groups of products with high productivity levels.

Another object of the invention is to provide a related machine for packaging such groups of products which is particularly efficient and is adapted to tolerate faults in its processing stations without requiring operation to be interrupted.

Another object of the present invention is to provide an operating accumulation assembly for machines for packaging groups of substantially platelike products and a related machine for packaging such groups of products which are low cost, easily and practically implemented, and safe in use.

In accordance with the invention, there is provided an operating accumulation assembly for machines for packaging groups of substantially platelike products as defined in the appended claims 1-4, and there is provided a machine for packaging groups of substantially platelike products as defined in the appended claims 5-6.

Further characteristics and advantages of the invention will become better apparent from the detailed description of a preferred, but not exclusive, embodiment of the operating accumulation assembly for machines for packaging groups of substantially platelike products and of the related machine for packaging such groups of products according to the invention, which is illustrated by way of non-limiting example in the accompanying drawings, wherein:

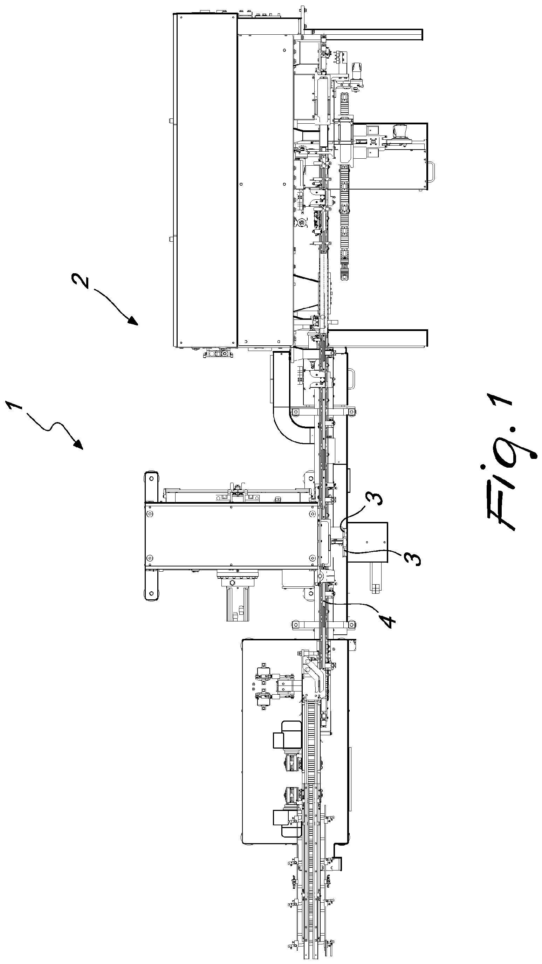

Figure 1 is a view from above of a packaging machine according to the invention;

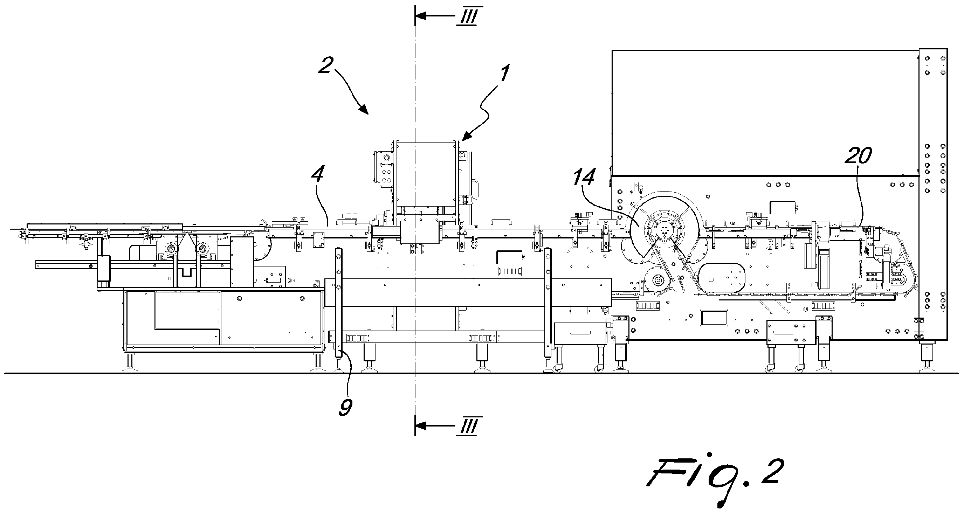

Figure 2 is a front elevation view of the machine in Figure 1;

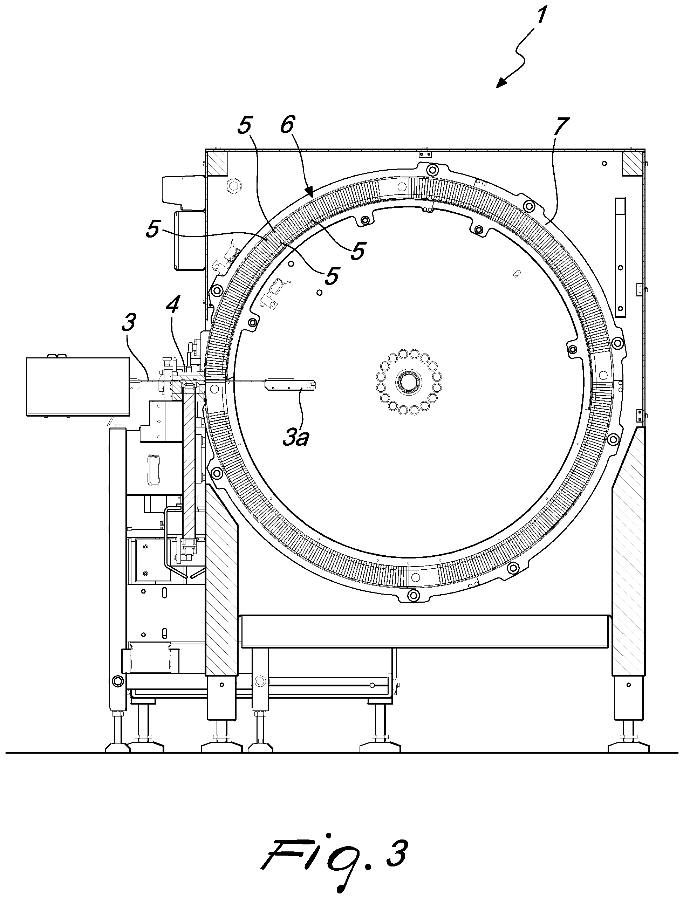

Figure 3 is a cross-sectional view taken along the line III-III in Figure 2;

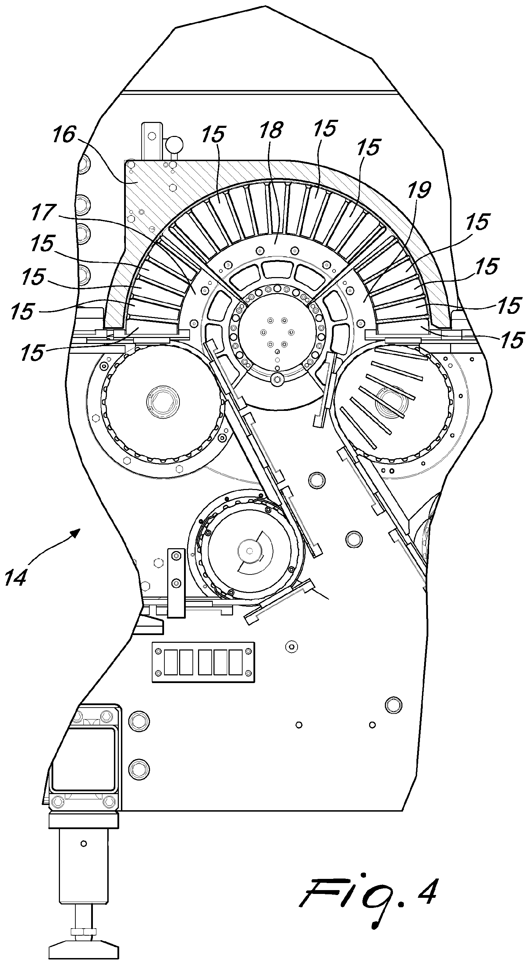

Figure 4 is an enlarged, partially sectional front elevation view of a dynamic accumulator of a machine according to the invention;

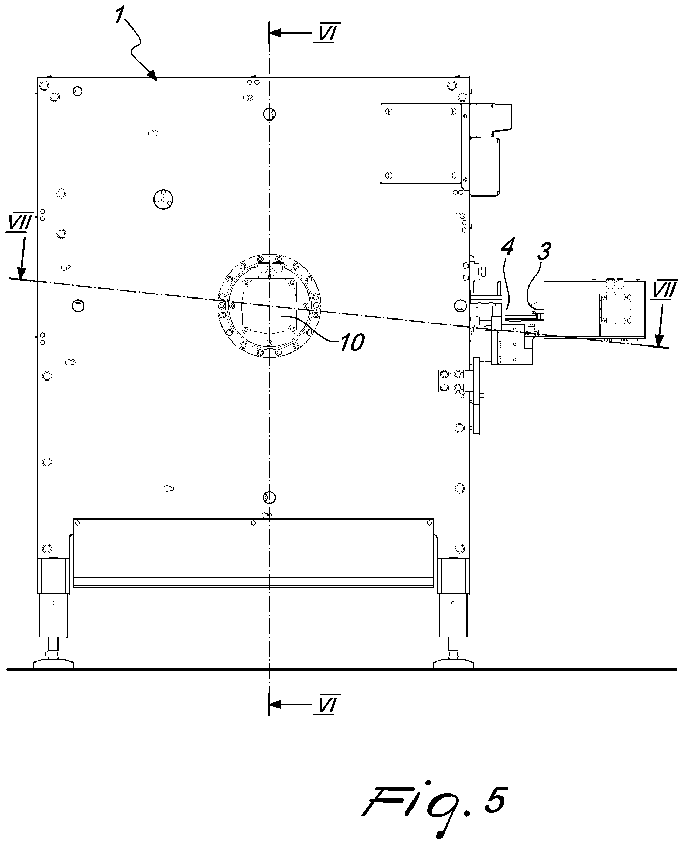

Figure 5 is a side view of the operating accumulation assembly according to the invention;

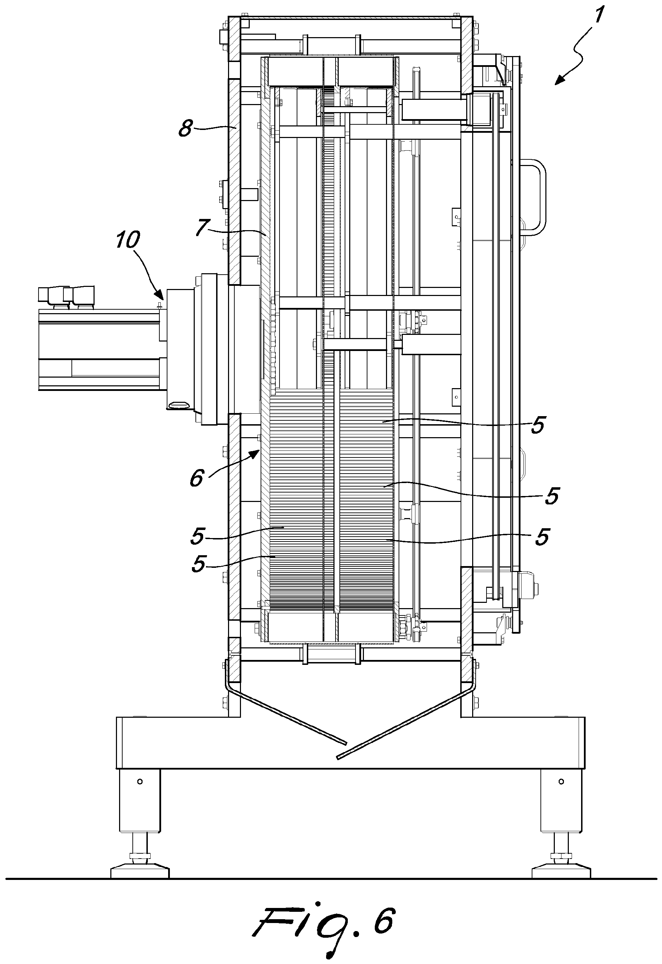

Figure 6 is a cross-sectional view taken along the line VI-VI in Figure 5;

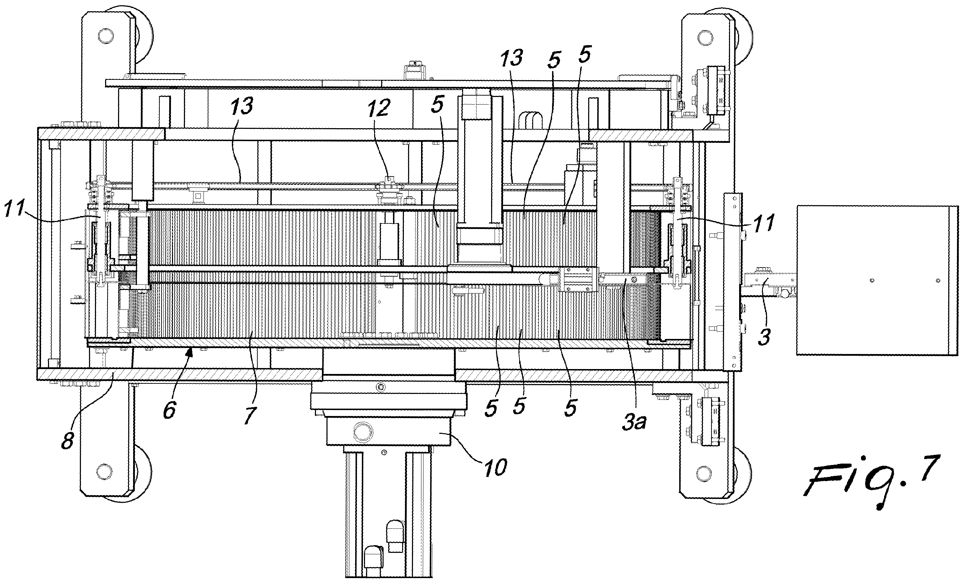

Figure 7 is a cross-sectional view taken along the line VII-VII in Figure 5.

With reference to the figures, the reference numeral 1 generally designates an operating accumulation assembly for machines 2 for packaging groups of substantially platelike products.

The term "group of products" is used to mean a single platelike product that is suitably wrapped, or a plurality of products (at least two) which are arranged according to a predefined spatial configuration, each one of which is individually wrapped.

In particular it should be noted that the products can preferably be ingots of chewing gum which, for the purposes of the packaging necessary for the sale thereof, must be individually wrapped with a suitable sheet and, subsequently, grouped according to a predefined number and arrangement and placed in a package.

The first wrapping will generally be carried out by way of a wrapping machine (which is arranged upstream of the machine 2), while the final packaging of a group of products will be carried out by way of a cartoning machine (which is arranged downstream of the machine 2).

In its most generic form, the operating accumulation assembly 1 for machines 2 according to the invention comprises at least one first pusher 3 for transferring at least one product from at least one conveyance line 4 to at least one respective seat 5 of a storage structure 6.

The storage structure 6 is movable by the action of respective actuators and is provided with at least one series of laterally adjacent and proximate seats 5.

The structure 6 furthermore comprises a second pusher 3a for transferring the at least one product that is present within at least one respective seat 6 to the at least one conveyance line 4.

It is convenient to note that, for the purposes of optimization of the operation of the assembly 1 and in order to increase its efficiency in association with the conveyance line 4 while also minimizing the overall encumbrances, the movement direction of the seats 5 of the storage structure 6 will preferably be substantially perpendicular to the advancement direction of the products along the conveyance line 4.

Specifically, if the advancement direction of the products on the line 4 is considered longitudinal, then the direction of the seats 5 of the storage structure 6 can be specified as being substantially transverse thereto.

According to the invention, the storage structure 6 is constituted by a substantially disc-like drum 7, which is provided, along at least one portion of its lateral surface, with at least one series of seats 5 distributed in a radial direction.

This is to ensure the minimal space occupation for the same number of seats 5 available for storing individually wrapped products originating from the wrapping machine.

In fact, with the seats 5 being arranged along a circumference, by varying the radius of the drum 7 it is possible to define the total number of seats 5 comprised therein, thus limiting the total space occupation substantially to the diameter of the drum 7 proper (and of its covering housing, if any).

In particular it should be noted that there are at least two series of seats 5, which are arranged along the lateral surface of the drum 7 (although, as previously mentioned, an embodiment provided with a single series of seats 5 is also possible and easily implementable), mutually laterally adjacent, and parallel to the advancement direction of the products on the conveyance line 4.

This embodiment determines an increase of the overall capacity of the assembly 1 (the more laterally adjacent series of seats 5 there are, the more products or groups of products that can be accommodated in the assembly 1): in such case the pusher 3 can be a single device provided with two synchronous locator levers, which are designed to act on the products, or it can comprise two different movable (independent) tabs that are actuated by a respective motor element.

It is convenient to note that, while remaining within the scope of the preferred embodiment mentioned previously, the storage structure 6 can conveniently comprise a fixed casing 8, which is coupled to the conveyance line 4 (for example the casing 8 can be made integral with the supporting chassis 9 of the line 4), and a gearmotor 10, which is flanged to the casing 8 and is intended to support and move the entire substantially disc-like drum 7.

The gearmotor 10 is in turn controlled by a respective control and management unit for the selective and sequential rotation of the drum 7 and the consequent alignment of each seat 5 with the conveyance line 4 and with the pushers 3 and 3a.

In essence the gearmotor 10 will make the drum 7 perform predefined rotations in order to align (at each rotation) a specific seat 5 (or a specific sequence of seats 5 that are mutually aligned with respect to the direction of the line 4) with the line 4 and with the pushers 3 (which is designed to transfer the product from the line 4 to the seat 5) and 3a (which is designed to transfer the product from the seat 5 to the line 4).

It should be noted that the line 4 usually comprises recesses for the accommodation of products, and it is thus essential that the movement of the line 4 is synchronized with the movements of the pushers 3 and 3a and of the drum 7 in order to ensure the perfect alignment of the recess containing an individual product with the pushers 3 and 7 and with the seat 5.

The possibility is not ruled out of application of the assembly 1 according to the invention in plants in which the conveyance line 4 is designed to transfer at least two products, stacked and/or laterally adjacent, in a respective recess.

In such case the storage structure 6 will comprise seats 5 that are adapted to accommodate the desired number of products with the geometric arrangement assumed thereby on the line 4.

It is furthermore possible to have two or more lines 4 adopted which are overlapped and synchronous: in such case it may be necessary to transfer all the products that are present in recesses of the lines 4 mutually aligned in a single seat 5 of the drum 7, by way of a conveniently contoured pusher 3 (obviously the opposite operation will also require that the corresponding pusher 3a have an adapted shape in order to return each individual product in the respective recess of the corresponding line 4).

According to the invention, the seats of each substantially disc-like drum 7, in order to ensure that it is adapted to the storage of products of various different formats, are delimited by fixed radial plates, in an upward and downward direction, and by a first fixed side wall and a second side wall which can translate parallel to itself.

The translational motion of the second side wall is provided by the action of respective actuators 11 which are controlled by a respective control and management unit or manually, in order to adjust the width of the seats 5 in relation to the format of the product to be accommodated.

The accompanying figures show, by way of example, an embodiment in which the actuators are constituted by endless screws which are generally driven by a motor 12 by way of transmission chains (or belts) (if manually activated, the chains will be connected to an element that can be actuated by an operator). However, other implementation solutions that envisage any other type of actuators are not ruled out.

The present invention furthermore relates to a machine 2 for packaging groups of substantially platelike products, which comprises at least one conveyance line 4 that originates from at least one machine for wrapping a single product and leads to at least one machine for cartoning groups of products.

According to the invention, in such machine 2 the line 4 is aligned and proximate, at at least one intermediate portion thereof, to at least one operating accumulation assembly 1 provided with a first pusher 3 for transferring at least one product, individually wrapped, from the at least one conveyance line 4 to at least one respective seat 5 of a storage structure 6.

The storage structure 6 in turn is movable by the action of respective actuators and is provided with a series of laterally adjacent and proximate seats 5.

The structure 6 also comprises a second pusher 3a for transferring at least one product, individually wrapped, which is present in at least one respective seat 5, to the at least one conveyance line 4, with consequent transfer thereof to to the subsequent cartoning machine.

It should be noted that in the machine 2, upstream of the cartoning machine and downstream of the operating accumulation assembly 1, a dynamic accumulator 14 of individually wrapped products can be conveniently arranged.

Such dynamic accumulator 14 is provided with a plurality of receptacles 15, each intended to accommodate at least one individual wrapped product or a predefined group of individually wrapped products.

The receptacles 15 are at least equal in number to the number of products that can be accommodated on the conveyance line 4 downstream of the operating accumulation assembly 1.

In the event of a malfunction of the cartoning machine (or an interruption of operation for another reason), before it is advisable in productive and economic terms to interrupt the operation of the wrapping machine located upstream of the line 4, it will already have sent a large number of individually wrapped products to the line 4.

Such individually wrapped products, however, cannot be received by the cartoning machine, for the formation of a respective package, since it is not in operation.

The products present on the line 4 (and destined for the line 4 from the wrapping machine) must be stored in order to prevent them from being discarded because the cartoning machine cannot receive them.

The assembly 1, with regard to the characteristics and to the geometric and structural shape described previously, can conveniently accommodate a large number of products (equal to the number of seats 5 that are comprised in it).

But the products that are already on the line 4, downstream of the assembly 1, cannot be diverted in the assembly 1 by the pusher 3 and will continue on their way toward the cartoning machine (which is not in operation).

In order to prevent such products from having to be discarded, it is possible to use the dynamic accumulator 14 which will be dimensioned to be capable of accommodating a number of products at least equal to those present on the portion of conveyance line 4 which is arranged between the assembly 1 and the point of entry of the accumulator 14.

According to a particularly efficient embodiment, the dynamic accumulator 14 is of the rotary type: it comprises a fixed enclosure 16 within which at least three sectors 17, 18 and 19 can rotate independently.

Each sector 17, 18 and 19 is provided with a plurality of receptacles 15.

During the operation of the dynamic accumulator 14, at least one receptacle 15 of a first sector 17 is aligned with the conveyance line 4 for receiving at least one respective wrapped product.

Simultaneously at least one receptacle 15 of a third sector 19 is instead aligned, optionally with the interposition of conveyor belts 20, with the cartoning machine.

At least one second sector 18 is interposed between the first sector 17 and the second sector 19.

This embodiment makes it possible to have a large number of receptacles 15: the independent movement of the three sectors 17, 18 and 19 in fact makes it possible to immediately transfer, downstream of the sector that is receiving the products from the line 4 (the sector 17 in the example described previously), the sector that has finished dispensing the products to the conveyor belt 20 (the sector 19 in the example described previously), and which is now ready to accept the products arriving from the line 4 (when the receptacles of the previous one have been completely filled).

As soon as a sector moves from the configuration for dispensing products to the belt 20 toward the conveyance line 4, the sector that follows it (the sector 18 in the example described previously) will move, aligning its receptacles 15 with the belt 20.

In this manner a dynamic storage will be achieved that is adapted to prevent having to discard the individually wrapped products that are present on the line 4, downstream of the assembly 1, when an interruption in the service of the cartoning machine arises.

The advantages of such an implementation architecture are evident even in the event of a malfunction of the wrapping machine located upstream of the line 4.

In fact the assembly 1 can discharge (by the action of the pusher 3a and following movements of the structure 6) the products that are accommodated in its seats 5 thus ensuring that, for a certain period of time, the line 4 continues transferring individually wrapped products to the cartoning machine.

The interposition of the dynamic accumulator 14 is again very useful here since any delay in the startup of the assembly 1 (once the malfunction of the wrapping machine and the failure to supply wrapped products to the line 4 have been noticed) will not determine a temporary break in the supply of products to the cartoning machine: in fact the dynamic accumulator 14 will continue to dispense the products contained in its receptacles 15 to the cartoning machine until the two sectors (18 and 19 in the example given above) containing the products are emptied.

In this time interval the assembly 1 will certainly have already started up, arranging the products on the line 4 once again and thus enabling the loading thereof in the receptacles 5 of the sector that is aligned with it (the sector 17 in the example above).

The assembly 1 can preferably operate according to Last In, First Out (LIFO) logic, i.e. the last products stored in it will be in the seats 5 closest to the line 4, thus by inverting the direction of rotation of the drum 7 (by way of the action of the gearmotor 10) it will be possible to bring them back into alignment with the line 4 in order to transfer them onto it.

The possibility is not ruled out however of adopting different types of operating logic, such as for example First In, First Out (FIFO) logic, by having the drum 7 rotate in one direction only (each seat 5 will return to face toward the line 4 after a complete 360° rotation of the drum 7).

A machine shutdown should be understood as a stoppage of the portion of the plant upstream (wrapping machine) or downstream (cartoning machine) of the assembly 1.

A stoppage of the wrapping machine upstream of the assembly 1 would imply the lack of product arriving on the line 4: in this case the assembly 1 will be emptied thus ensuring the operation, if limited, of the portion of the plant located downstream.

But if there is a stoppage downstream of the assembly 1, and it is therefore impossible to process the arriving products, then in conventional plants it is necessary to either stop the wrapping machine or discard the products. Generally a shutdown is more burdensome, in that the time required to restart the entire plant is considerable, and thus it is almost always decided to discard the product. The assembly 1, however, makes it possible to store the products for a certain time period, thus preventing the discarding thereof.

The presence of the assembly 1 prevents, in the event of shutdowns, falls in production of the entire plant and of the machine 2.

The assembly 1, coupled to the conveyance line 4, is, in a particularly functional embodiment thereof, a drum 7 (table) rotating on a horizontal axis which performs a movement that is transverse to the conveyance line 4. The simple kinematic chain is formed by the gearmotor 10 which, furthermore, supports the drum 7 which is mounted in a cantilever fashion.

The capacity of the assembly 1 is determined by the diameter of the drum 7 and of the number of laterally adjacent paths that it comprises (in the accompanying figures, there are two laterally adjacent series of seats 5 on the drum 7).

By way of example it should be noted that by adopting a table of diameter equal to one meter and two paths (series of seats 5) a capacity of the assembly 1 of 840 seats 5 can be achieved: these 840 seats 5 are adapted to accommodate the products arranged radially.

Assuming a hypothetical production rate for the wrapping machine upstream of the assembly 1 of approximately 167 products per minute, the assembly 1 can therefore guarantee support for approximately 5 minutes of production. An assembly 1 of these dimensions is thus designed for short machine shutdowns. The possibility is not excluded of providing larger assemblies 1 in order to compensate for problems derived from machine shutdowns that last a long time.

The assembly 1, as illustrated above, has the capacity to be adapted to format requirements owing to the presence of a movable side wall in each path (series of seats 5) thereof.

In essence each path (series of seats 5) has a fixed lateral wire and a movable wire on the opposite wall. Obviously the end containment walls will adapt to the distance between the two side walls in order to prevent the products from being able to exit (fall) from the seats 5.

Advantageously the present invention solves the above mentioned problems, by providing an operating accumulation assembly 1 for machines 2 for packaging groups of substantially platelike products which minimizes production discards, by making it possible in fact to store a large number of products in the event of interruptions arising in the operation of the stations (for example the wrapping machine) arranged upstream and/or of the stations (for example the cartoning machine) arranged downstream.

Conveniently the accumulation assembly 1 prevents the interruption of the entire plant in the event of a malfunction or shutdown of one of the processing stations that constitute it.

Conveniently the machine 2 enables the packaging of groups of products with high productivity levels, preventing drastic falls in yield and/or productivity in the event of interruptions in the operation of the stations upstream and/or of the stations downstream of the plant in which it is installed.

Positively the machine 2 is particularly efficient and is adapted to tolerate faults/shutdowns of its processing stations without necessitating the overall interruption of the operation.

Positively the operating accumulation assembly 1 and the related machine 2 for packaging groups of platelike products are relatively low cost and are substantially easily and practically implemented, and also safe in use.

Obviously, with regard to what is explained and defined above, the assembly 1 and the machine 2 are also suitable for packaging an individual product, owing to the fact that the term "group of products" has been defined as comprising at least one individually wrapped product (even if, from a practical viewpoint, the adoption of groups constituted by several individually wrapped products is much more likely).

The invention, thus conceived, is susceptible of numerous modifications and variations, the scope of the being defined by appended claims.

In practice, the materials employed, as well as the dimensions, may be any according to requirements and to the state of the art.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. An operating accumulation assembly for machines (2) for packaging groups of substantially platelike products, comprising a storage structure (6) and at least one first pusher (3) for transferring at least one product from at least one conveyance line (4) to at least one respective seat (5) of the storage structure (6), said storage structure (6) being constituted by a substantially disc-like drum (7), which is provided, along at least one portion of its lateral surface, with at least one series of laterally adjacent and proximate seats (5) distributed in a radial direction, and which is rotatably movable by the action of respective actuators, said structure (6) comprising a second pusher (3a) for transferring the at least one product that is present within at least one respective seat (5) to the at least one conveyance line (4),
the rotation movement direction of said drum (7) being substantially perpendicular to the advancement direction of the products along said conveyance line (4),
**characterized in that** said seats (5) of said substantially disc-like drum (7) being delimited by fixed radial plates, in an upward and downward direction, and by a first fixed side wall and a second side wall that can translate parallel to itself by the action of respective actuators (11) that are controlled by a respective control and management unit, to adjust the width of said seat (5) in relation to the format of the product to be accommodated.

2. The accumulation assembly according to claim 1, **characterized in that** said series of seats (5), along said lateral surface of said drum (7), are at least two in number, arranged mutually side-by-side, parallel to the advancement direction of the products on said conveyance line (4).

3. The accumulation assembly according to claim 1, **characterized in that** said storage structure (6) comprises a fixed casing (8), which is coupled to said conveyance line (4), and a gearmotor (10), which is flanged to said casing (8) and is intended to support and move said substantially disc-like drum (7), said gearmotor (10) being controlled by a respective control and management unit for the selective and sequential rotation of said drum (7) and the consequent alignment of each said seat (7) with said conveyance line (4) and with said pushers (3, 3a).

4. The accumulation assembly according to claim 1, **characterized in that** said storage structure (6) is constituted by a substantially vertical column provided, along its face that is contiguous to said conveyance line (4), with at least one series of said seats (5), which can slide selectively and sequentially along said column by the action of a respective actuator that is controlled by a control and management unit.

5. A machine for packaging groups of substantially platelike products, comprising at least one conveyance line (4), which originates from at least one machine for wrapping a single product and converges toward at least one machine for cartoning groups of products, said line (4) being aligned and proximate, at at least one intermediate portion thereof, to at least one operating accumulation assembly (1) according to any one or more of claims 1 to 4, upstream of said cartoning machine and downstream of said operating accumulation assembly (1) there being a dynamic accumulator (14) of individually wrapped products, which is provided with a plurality of receptacles (15), each intended to accommodate at least one individual wrapped product, said receptacles (15) being at least equal in number to the number of products that can be accommodated on said conveyance line (4) downstream of said operating accumulation assembly (1).

6. The machine according to claim 5, **characterized in that** said dynamic accumulator (14) is of the rotary type, comprising a fixed enclosure (16) within which at least three sectors (17, 18, 19) can rotate independently, each sector being provided with a plurality of receptacles (15), during operation at least one receptacle (15) of a first sector (17) being aligned with said conveyance line (4) for receiving at least one respective wrapped product, at least one receptacle (15) of a third sector (19) being aligned, optionally with the interposition of conveyor belts (20), with said cartoning machine, and at least one second sector (18) being interposed between the first sector (17) and the second sector (18).

## Patentansprüche

1. Eine Betriebsakkumulationsanordnung für Maschinen (2) zum Verpacken von Gruppen im Wesentlichen plattenförmiger Produkte, die eine Lagerungsstruktur (6) und mindestens einen ersten Schieber (3) zum Befördern mindestens eines Produkts von mindestens einer Förderlinie (4) zu mindestens einem entsprechenden Sitz (5) der Lagerungsstruktur (6) umfasst, wobei die Lagerungsstruktur (6) aus einer im Wesentlichen scheibenförmigen Trommel (7) besteht, die entlang mindestens einem Abschnitt ihrer seitlichen Oberfläche mit mindestens einer Reihe seitlich benachbarter und angrenzender Sitze (5) ausgestattet ist, die in eine radiale Richtung verteilt sind, und die durch die Wirkung entsprechender Antriebselemente drehbar beweglich ist; wobei die Struktur (6) einen zweiten Schieber (3a) zum Befördern des mindestens einen Produkts, das sich in mindestens einem entsprechenden Sitz (5) befindet, zur mindestens einen Förderlinie (4) umfasst;
wobei die Drehrichtung der Trommel (7) im Wesentlichen senkrecht zur Vorschubrichtung der Produkte entlang der Förderlinie (4) ist;
**dadurch gekennzeichnet, dass** die Sitze (5) der im Wesentlichen scheibenförmigen Trommel (7) nach oben und nach unten hin durch feste radiale Platten und durch eine erste feste Seitenwand und eine zweite Seitenwand begrenzt sind, die sich parallel zu sich selbst bewegen kann durch die Wirkung entsprechender Antriebselemente (11), welche durch eine entsprechende Steuer- und Verwaltungseinheit gesteuert werden, um die Breite des Sitzes (5) im Verhältnis zum Format des aufzunehmenden Produktes anzupassen.

2. Die Akkumulationsanordnung gemäß Anspruch 1, **dadurch gekennzeichnet, dass** die Anzahl der Reihe von Sitzen (5) entlang der Seitenfläche der Trommel (7) mindestens zwei beträgt, nebeneinander angeordnet, parallel zur Vorschubrichtung der Produkte entlang der Förderlinie (4).

3. Die Akkumulationsanordnung gemäß Anspruch 1, **dadurch gekennzeichnet, dass** die Lagerungsstruktur (6) ein festes Gehäuse (8) umfasst, das mit der Förderlinie (4) gekoppelt ist, und einen Getriebemotor (10), der an das Gehäuse (8) angeflanscht ist und dazu dient, die im Wesentlichen scheibenförmige Trommel (7) zu tragen und zu bewegen, wobei der Getriebemotor (10) für die selektive und sequentielle Drehung der Trommel (7) und die daraus folgende Ausrichtung jedes Sitzes (7) mit der Förderlinie (4) und mit den Schiebern (3, 3a) von einer entsprechenden Steuer- und Verwaltungseinheit gesteuert wird.

4. Die Akkumulationsanordnung gemäß Anspruch 1, **dadurch gekennzeichnet, dass** die Lagerungsstruktur (6) aus einer im Wesentlichen vertikalen Säule besteht, die entlang ihrer Fläche, die an die Förderlinie (4) angrenzt, mit mindestens einer Reihe der Sitze (5) ausgestattet ist, welche durch die Wirkung eines entsprechenden Antriebselements, das von einer Steuer- und Verwaltungseinheit gesteuert wird, selektiv und sequentiell entlang der Säule gleiten können.

5. Eine Maschine zum Verpacken von Gruppen im Wesentlichen plattenförmiger Produkte, die mindestens eine Förderlinie (4) umfasst, welche an mindestens einer Maschine zum Einwickeln eines einzelnen Produkts startet und zu mindestens einer Maschine zum Verpacken von Produktgruppen in Kartons zusammenläuft, wobei die Linie (4) an mindestens einem intermediären Abschnitt derselben mit mindestens einer Betriebsakkumulationsanordnung (1) gemäß einem oder mehreren der Ansprüche 1 bis 4 ausgerichtet ist und an sie angrenzt; wobei sich stromaufwärts von der Kartonverpackungsmaschine und stromabwärts von der Betriebsakkumulationsanordnung (1) eine dynamische Sammelvorrichtung (14) für einzeln verpackte Produkte befindet, die mit einer Vielzahl von Fächern (15) versehen ist, die jeweils dazu dienen, mindestens ein einzelnes eingewickeltes Produkt aufzunehmen, wobei die Anzahl der Fächer (15) mindestens gleich der Anzahl von Produkten ist, die auf der Förderlinie (4) stromabwärts von der Betriebsakkumulationsanordnung (1) untergebracht werden können.

6. Die Maschine gemäß Anspruch 5, **dadurch gekennzeichnet, dass** die dynamische Sammelvorrichtung (14) vom Drehtyp ist und ein festes Gehäuse (16) umfasst, in dem sich mindestens drei Sektoren (17, 18, 19) unabhängig drehen können, wobei jeder Sektor mit einer Vielzahl von Fächern (15) ausgestattet ist und während des Betriebs mindestens ein Fach (15) eines ersten Sektors (17) mit der Förderlinie (4) ausgerichtet ist, um mindestens ein jeweiliges eingewickeltes Produkt aufzunehmen, wobei mindestens ein Fach (15) eines dritten Sektors (19), wahlweise mit Zwischenschaltung von Förderbändern (20), mit der Kartonverpackungsmaschine ausgerichtet ist und mindestens ein zweiter Sektor (18) zwischen dem ersten Sektor (17) und dem zweiten Sektor (18) angeordnet ist.

## Revendications

1. Ensemble opérationnel d'accumulation pour des machines (2) destinées à emballer des groupes de produits sensiblement analogues à des plaques, comportant une structure de stockage (6) et au moins un premier poussoir (3) pour transférer au moins un produit depuis au moins une ligne de transport (4) jusqu'à au moins un logement (5) respectif de la structure de stockage (6), ladite structure de stockage (6) étant constituée d'un tambour sensiblement analogue à un disque (7), qui est pourvu, le long d'au moins une partie de sa surface latérale, d'au moins une série de logements latéralement adjacents et proches (5) répartis dans une direction radiale, et qui est mobile en rotation par l'action d'actionneurs respectifs, ladite structure (6) comportant un second poussoir (3a) pour transférer le au moins un produit qui est présent à l'intérieur d'au moins un logement (5) respectif vers la au moins une ligne de transport (4),
la direction de mouvement de rotation dudit tambour (7) étant sensiblement perpendiculaire à la direction d'avance des produits le long de ladite ligne de transport (4),
**caractérisé en ce que** lesdits logements (5) dudit tambour sensiblement analogue à un disque (7) sont délimités par des plaques radiales fixes, dans une direction vers le haut et vers le bas, et par une première paroi latérale fixe et une seconde paroi latérale qui peut se déplacer en translation parallèlement à elle-même par l'action d'actionneurs (11) respectifs qui sont commandés par une unité de commande et de gestion respective, pour régler la largeur dudit logement (5) par rapport au format du produit à recevoir.

2. Ensemble d'accumulation selon la revendication 1, **caractérisé en ce que** les logements de ladite série de logements (5), le long de ladite surface latérale dudit tambour (7), sont au moins au nombre de deux, agencés mutuellement côte à côte, parallèlement à la direction d'avance des produits sur ladite ligne de transport (4) .

3. Ensemble d'accumulation selon la revendication 1, **caractérisé en ce que** ladite structure de stockage (6) comporte un carter fixe (8), qui est couplé à ladite ligne de transport (4), et un moteur à engrenages (10), qui est relié par brides audit carter (8) et est destiné à supporter et mettre en mouvement ledit tambour sensiblement analogue à un disque (7), ledit moteur à engrenages (10) étant commandé par une unité de commande et de gestion respective pour la rotation sélective et séquentielle dudit tambour (7) et l'alignement conséquent de chaque dit logement (5) avec ladite ligne de transport (4) et avec lesdits poussoirs (3, 3a).

4. Ensemble d'accumulation selon la revendication 1, **caractérisé en ce que** ladite structure de stockage (6) est constituée d'une colonne sensiblement verticale pourvue, le long de sa face qui est contiguë à ladite ligne de transport (4), d'au moins une série desdits logements (5), qui peuvent coulisser sélectivement et séquentiellement le long de ladite colonne par l'activation d'un actionneur respectif qui est commandé par une unité de commande et de gestion.

5. Machine pour emballer des groupes de produits sensiblement analogues à des plaques, comportant au moins une ligne de transport (4), qui provient d'au moins une machine pour emballer un seul produit et converge vers au moins une machine pour encartonner des groupes de produits, ladite ligne (4) étant alignée et proche, sur au moins une partie intermédiaire de celle-ci, d'au moins un ensemble opérationnel d'accumulation (1) selon l'une quelconque ou plusieurs des revendications 1 à 4, en amont de ladite machine d'encartonnage, et en aval dudit ensemble opérationnel d'accumulation (1) étant agencé un accumulateur dynamique (14) de produits individuellement enveloppés, qui est pourvu d'une pluralité de réceptacles (15), chacun étant destiné à recevoir au moins un produit emballé individuel, lesdits réceptacles (15) étant au moins égaux en nombre au nombre de produits qui peuvent être reçus sur ladite ligne de transport (4) en aval dudit ensemble opérationnel d'accumulation (1).

6. Machine selon la revendication 5, **caractérisée en ce que** ledit accumulateur dynamique (14) est du type rotatif, comportant une enceinte fixe (16) à l'intérieur de laquelle au moins trois secteurs (17, 18, 19) peuvent tourner indépendamment, chaque secteur étant pourvu d'une pluralité de réceptacles (15), pendant le fonctionnement au moins un réceptacle (15) d'un premier secteur (17) étant aligné avec ladite ligne de transport (4) pour recevoir au moins un produit enveloppé respectif, au moins un réceptacle (15) d'un troisième secteur (19) étant aligné, facultativement avec l'interposition de bandes de convoyage (20), avec ladite machine d'encartonnage, et au moins un deuxième secteur (19) étant intercalé entre le premier secteur (17) et le deuxième secteur (18).
